Europäisches Patentamt

European Patent Office

Office européen des brevets

(11) Veröffentlichungsnummer : **0 288 418 B1**

(12) **EUROPÄISCHE PATENTSCHRIFT**

(19)

(45) Veröffentlichungstag der Patentschrift :
**22.07.92 Patentblatt 92/30**

(21) Anmeldenummer : **88730074.7**

(22) Anmeldetag : **24.03.88**

(51) Int. Cl.⁵ : **H04B 10/00**

(54) **Verfahren zur optischen Nachrichtenübertragung mit Heterodynempfang.**

(30) Priorität : **21.04.87 DE 3713340**

(43) Veröffentlichungstag der Anmeldung :
**26.10.88 Patentblatt 88/43**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**ELECTRONIC DESIGN, Band 15, Nr. 12, Juni
1967, Seite 104, Rochelle Park, NJ, US; "AM
receiver uses laser LO"
ELECTRONICS LETTERS, Band 22, Nr. 9, April
1986, Seiten 479-481, Stevenage, Herts, GB;
J.K. WHEELER et al.: "Two-waytransmission
using electro-optical modulator"
ELECTRONICS LETTERS, Band 22, Nr. 10, Mai
1986, Seiten 517-518, Stevenage, Herts, GB;
P.J. DUTHIE: "Bidirectional fibre-opticlink
using reflective modulation"**

(73) Patentinhaber : **KRONE Aktiengesellschaft
Beeskowdamm 3-11
W-1000 Berlin 37 (DE)**
㊔ **AT BE CH DE ES FR GB GR IT LI LU NL SE**

Patentinhaber : **Standard Elektrik Lorenz
Aktiengesellschaft
Lorenzstrasse 10
W-7000 Stuttgart 40 (DE)**
㊔ **DE**

Patentinhaber : **Kabelmetal Electro GmbH
Kabelkamp 20
W-3000 Hannover 1 (DE)**
㊔ **DE**

Patentinhaber : **Philips Patentverwaltung
GmbH
Wendenstrasse 35 Postfach 10 51 49
W-2000 Hamburg 1 (DE)**
㊔ **DE**

Patentinhaber : **SIEMENS
AKTIENGESELLSCHAFT
Wittelsbacherplatz 2
W-8000 München 2 (DE)**
㊔ **DE**

Patentinhaber : **N.V. Philips'
Gloeilampenfabrieken
Groenewoudseweg 1
NL-5621 BA Eindhoven (NL)**
㊔ **FR GB IT NL SE**

(72) Erfinder : **Rocks, Manfred, Dr.-Ing.
Müllerstrasse 25A
W-1000 Berlin 45 (DE)**

## Beschreibung

Die Erfindung betrifft ein Verfahren zur optischen Nachrichtenübertragung gemäß dem Oberbegriff des Hauptanspruches.

Aus der Zeitschrift "Electronic Design, Band 15, Nr.12, Juni 1967, Seite 104" ist ein optischer Superheterodynempfänger zum Empfang amplitudenmodulierter Signale beschrieben, wobei der Übertragungsweg durch die Atmosphäre gebildet wird. Der Empfänger enthält einen Laser, dessen Ausgangsstrahl in zwei Teile aufgespalten wird. Der eine Teil, der die Lokallaserwelle bildet, wird durch einen Frequenzschieber geführt, während der andere Teil, der den Trägeranteil darstellt, die atmosphärische Übertragungsstrecke durchläuft. Der Trägeranteil wird von einem entfernt stehenden Retroreflektor reflektiert und mittels einer Optik vom Empfänger aufgefangen. Durch das Passieren der Atmosphäre ist der reflektierte Trägeranteil in seiner Amplitude verändert. Mittels eines optischen Systems werden die Lokallaserwelle und der reflektierte Trägeranteil nach dem optischen Heterodynverfahren gemischt. Ein Photodetektor ermittelt die Differenzfrequenz (Zwischenfrequenz), die einer Elektronik zur Weiterverarbeitung zugeführt wird.

Bei diesem Gerät handelt es sich um die Beschreibung eines optischen Empfängers, der nach dem Superheterodynverfahren des bekannten Radioempfanges arbeitet. In nachteiliger Weise findet keine gezielte Amplitudenmodulation des übertragenen Anteiles statt, so daß es sich mehr um ein Gerät zur meßtechnischen Erfassung atmosphärischer Störungen handelt, da die Amplitudenänderung des übertragenen Strahles durch die Atmosphäre erfolgt.

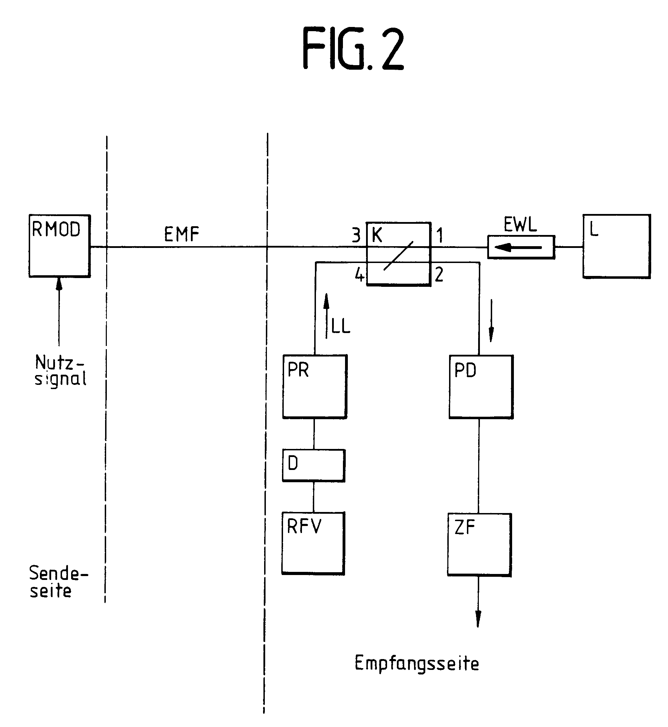

Des weiteren ist der in Figur 2 dargestellte optische Aufbau sehr komplex und mit Justierproblemen behaftet, so daß ein Einsatz in der Nachrichtentechnik schwer möglich ist.

Das Prinzip des Ein-Laser-Heterodynempfangs ist aus der optischen Meßtechnik bekannt.

In mehreren Veröffentlichungen, z.B. in "Electronic Letters" Vol. 16 (1980) S. 630-631 oder in "IEEE Journ. of Quantum Electronics", Vol. 22 (1986) S. 2070-2074 ist dieses Meßprinzip beschrieben. Als Ziel wird immer die Messung der spektralen Leistungsdichte des Laserphasenrauschens angestrebt. Das bekannte Meßsystem wird immer an einem Ort, z.B. in einem Labor aufgebaut.

Dadurch eignet es sich nicht zur Übertragung von modulierten optischen Signalen zwischen zwei räumlich voneinander getrennten Orten.

Der Erfindung liegt von daher die Aufgabe zugrunde, ein Verfahren zur optischen Nachrichtenübertragung der gattungsgemäßen Art, insbesondere für Breitbandübertragungen, zu entwickeln, welches unempfindlich gegenüber äußeren Störungen ist und mit einem Minimum an Komponenten arbeitet.

Die Lösung dieser Aufgabe ergibt sich aus den kennzeichnenden Merkmalen des neuen Anspruches 1. Erfindungsgemäß wird die Übertragungsstrecke durch eine Einmodenfaser gebildet, die vom ersten Anteil des Laserstrahles, dem Trägeranteil, in beiden Richtungen durchlaufen wird. Dabei wird der Trägeranteil auf der Senderseite durch einen Reflektionsmodulator mit dem Nutzsignal versehen. Empfangsseitig erfolgt die Frequenzverschiebung der Lokallaserwelle durch eine Reflektionsverschiebungseinheit.

Als besonders vorteilhaft wird herausgestellt, daß der Sender durch den Einsatz eines Reflektionsmodulators nur aus diesem besteht, Irgendwelche Ein- und Auskoppelelemente bzw. Strahlteiler entfallen folglich. Auch auf der Empfängerseite wird durch den Einsatz einer Reflektionsverschiebungseinheit eine wesentliche Vereinfachung gegenüber dem bekannten Empfänger erzielt, da die Lokallaserwelle und der Trägeranteil im gleichen Koppelelement gemischt werden, in welchem auch die Aufteilung des empfangsseitig angeordneten Lasers in einen ersten und zweiten Anteil, d.h. Trägeranteil und Lokallaserwelle erfolgt.

Die mit der Erfindung erzielten Vorteile bestehen insbesondere darin, daß durch die Mischung eines starken Signals (Lokallaser) mit einem schwachen von der Übertragungsstrecke kommenden modulierten Signals die Empfängerempfindlichkeit gegenüber dem Direktempfangsprinzip erhöht wird, daß auf der Sendeseite nur passive optische Bauelemente verwendet wird und daß die Frequenzregelung des Lokallasers durch ZF-Spannungsrückführung entfällt, da eine vorhandene Laserfrequenzdrift in beiden Wegen gleichsinnig, nur um die Signallaufzeit durch die Einmodenfaser zeitlich versetzt, auftritt. Da eine solche Frequenzdrift hauptsächlich thermische Ursachen hat, ist diese bei einem gut temperaturstabilisierten Laser langsam, so daß der Laufzeitunterschied nicht störend wirkt.

Weiterhin ist vorteilhaft, daß eine frequenzmäßige Abstimmung verschiedener Laser nicht erforderlich ist und daß die Einstellung der Zwischenfrequenz nicht über den Laser, der sehr frequenzempfindlich auf Strom- und Temperaturänderungen reagiert, sondern mittels einer passiven Frequenzverschiebeeinheit erfolgt. Dadurch entfällt die kritische Einstellung des Laserarbeitspunktes.

Weiterhin sind alle systemtechnischen Variationsmöglichkeiten, wie sie die Heterodynsysteme bieten, auch hier gegeben. Insbesondere gibt es keine Einschränkungen für das Modulationsverfahren in Hinsicht auf analog oder digital. Statt eines Polarisationsreglers kann auch Polarisationsdiversityempfang vorgenommen werden. Optische Verstärker lassen sich an geeigneten Systemstellen einsetzen, auch ist optischer Frequenz-

2

multiplexbetrieb möglich. Das erfindungsgemäße Verfahren läßt sich u.a. vorteilhaft für Breitbandübertragung im Teilnehmeranschlußbereich anwenden. Dort sind die Anschlußlängen zwischen Vermittlungsstelle und Teilnehmer kurz (maximal 10 km) und die Anzahl der zu erwartenden Anwendungsfälle ist sehr hoch. Deshalb müssen solche Systeme billig und einfach sein, was mit diesem System, verglichen mit den bekannten glasfasergebundenen Zwei-Laser-Heterodynsystemen, gewährleistet ist.

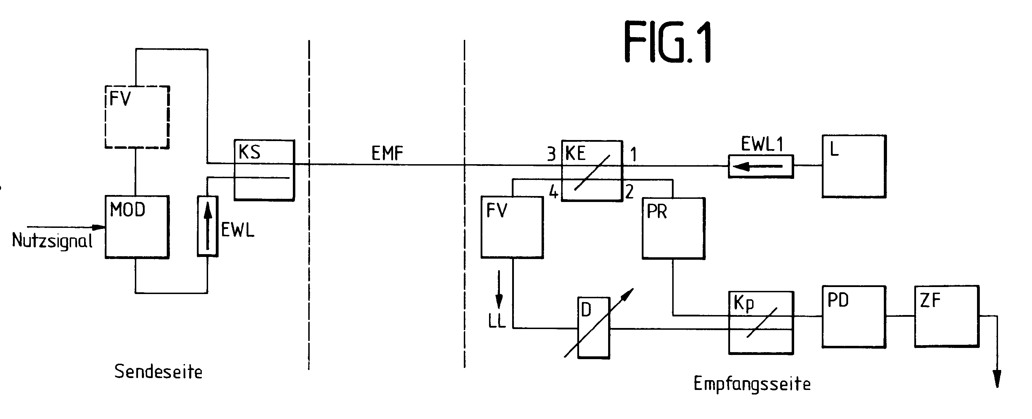

Die Erfindung wird anhand der in Figur 1 und Figur 2 dargestellten Ausführungsbeispielen näher beschrieben.

Es zeigen:

Fig. 1 ein Blockschaltbild eines optischen Über tragungssystems mit Heterodynempfang bei Verwendung nur eines Lasers und drei Kopplern.

Fig. 2 ein Blockschaltbild eines optischen Über tragungssystems mit Heterodynempfang bei Verwendung nur eines Lasers und nur eines Kopplers.

In Fig. 1 ist das Blockschaltbild eines optischen Übertragungssystems mit Heterodynempfang bei Verwendung nur eines Lasers L und drei Kopplern KS, KE, KP dargestellt.

Der Laser L emittiert einen unmodulierten optischen Träger mit einer Bandbreite < 10 MHz. Dieser Träger läuft über eine erste optische Einwegleitung EWL1, welche Laserfrequenz- und Laserphasenfluktuationen infolge reflektierter Strahlungsanteile verhindert. Der unmodulierte optische Träger wird im Tor 1 des empfangsseitig zugeordneten Kopplers KE, der in Richtung Sendeseite als Verzweiger arbeitet, eingespeist und auf Tor 3 und Tor 4 aufgeteilt. Der den Koppler KE am Tor 4 verlassende Trägeranteil ist die Lokallaserwelle LL, während der am Tor 3 austretende Trägeranteil der Sendeseite über die Einmodenfaser EMF zugeführt wird. Dort findet - alternativ zur Frequenzverschiebung im empfangsseitigen Zweig am Tor 4 von Koppler KE - zunächst die optische Frequenzverschiebung um $\Delta f$ in der Frequenzverschiebeeinheit FV sowie im Modulator MOD die Modulation des Trägers mit dem Nutzsignal statt.

Die sendeseitige zweite Einwegleitung EWL2 ist dann notwendig, wenn die den Modulator MOD und die Frequenzverschiebeeinheit FV in beiden Richtungen durchlaufenden Trägeranteile sich gegenseitig stören. Der am Ausgang der zweiten Einwegleitung EWL2 mit dem Nutzsignal modulierte und frequenzverschobene Träger wird über den Koppler KS auf die Einmodenfaser EMF gegeben und läuft in Richtung Empfangsseite.

Dort wird im Koppler KE das modulierte optische Signal von Tor 3 nach Tor 2 übergekoppelt und über einen Polarisationsregler PR, in dem der Polarisationszustand des modulierten optischen Signals dem der Lokallaserwelle LL angepaßt wird, im Koppler KP mit der Lokallaserwelle LL, die in ihrer Leistung in einem optischen Dämpfungsglied D auf optimale Empfängerempfindlichkeit eingestellt werden kann, zusammengeführt.

Die Mischung und Zwischenfrequenzerzeugung erfolgt, wie bei den bekannten Lösungsvorschlägen für andere Heterodynsysteme auch, in einer Photodiode PD. Ein nachfolgendes Zwischenfrequenzfilter ZF muß auf die Mittenfrequenz $\Delta f$ eingestellt sein, damit das ZF-Signal weitgehend unverzerrt der Demodulationsstufe zugeleitet wird.

Fig.2 zeigt ein Blockschaltbild eines optischen Übertragungssystems mit Heterodynempfang, bei dem nur ein Laser L und ein Koppler K benötigt wird.

Im Gegensatz zum in Fig.1 gezeigten Ausführungsbeispiel wird in diesem Ausführungsbeispiel nur ein 4-Tor-Koppler K verwendet. Die Bauteile Frequenzverschiebeeinheit FV und Modulator MOD sind als reflektierende Komponenten, also als Reflexionsfrequenzverschiebeeinheit RFV und Reflexionsmodulator RMOD ausgeführt, d.h. Eingangs- und Ausgangssignal benutzen dasselbe Tor, jedoch in verschiedenen Richtungen.

Die Bauteile Laser L, die Einwegleitung EWL, optisches Dämpfungsglied D, Polarisationsregler PR, Photodiode PD und Zwischenfrequenzfilter ZF haben die gleiche Funktion wie im in Fig. 1 dargestellten Ausführungsbeispiel. Der unmodulierte optische Träger wird im Koppler K aufgeteilt. Das am Tor 4 austretende optische Signal wird über den Polarisationsregler PR und das optische Dämpfungsglied D der Reflexionsfrequenzverschiebeeinheit RFV zugeführt und seiner optischen Frequenz um den Betrag $\Delta f$ verschoben. Dieses optische Signal erreicht als Lokallaserwelle LL den Koppler K wieder am Tor 4 und tritt am Tor 2 aus. Der am Tor 1 austretende Anteil wird durch die Einwegleitung EWL blockiert. Das am Tor 3 des Kopplers K austretende optische Signal wird von der Übertragungsstrecke EMF in Richtung Sendeseite übertragen, dort im Reflexionsmodultor RMOD mit dem Nutzsignal moduliert und durchläuft in dieser Form die Übertragungsstrecke EMF erneut, allerdings jetzt in umgekehrter Richtung, um in das Tor 3 des Kopplers K einzutreten und über Tor 2 des Kopplers K gemeinsam mit der frequenzveischobenen Lokallaserwelle LL durch die Photodiode PD gemischt zu werden. Die weitere Verarbeitung erfolgt wie bei dem Ausführungsbeispiel in Fig. 1.

**Patentansprüche**

1. Verfahren zur optischen Nachrichtenübertragung, insbesondere für Breitbandübertragungen, zwischen räumlich voneinander getrenntem Sender und Empfänger, wobei ein unmodulierter optischer Träger eines empfangsseitig angeordneten Lasers in zwei Anteile aufgeteilt wird, wobei der erste Anteil den der Übertragungsstrecke zugeführten Trägeranteil und der zweite Anteil die Lokallaserwelle bildet, die um einen Betrag f frequenzverschoben wird, und der über die Übertragungsstrecke vom Sender zurückkommende Trägeranteil mit der Lokallaserwelle nach dem optischen Heterodynverfahren gemischt wird, wodurch sich eine Zwischenfrequenz ergibt,

**dadurch gekennzeichnet,**

daß die Übertragungsstrecke eine Einmodenfaser (EMF) ist, die der Trägeranteil in beiden Richtungen durchläuft,

daß der Trägeranteil senderseitig durch einen Reflexionsmodulator (RMOD) mit dem Nutzsignal moduliert wird und

daß die Frequenzverschiebung der Lokallaserwelle (LL) in einer Reflexionsverschiebungseinheit (RFV) erfolgt.

2. Verfahren nach Anspruch 1,

**dadurch gekennzeichnet,**

daß die beiden Anteile des unmodulierten optischen Trägers gleich groß sind.

3. Verfahren nach Anspruch 1,

**dadurch gekennzeichnet,**

daß die Einmodenfaser (EMF) polarisationserhaltend ist.

4. Verfahren nach Anspruch 1,

**dadurch gekennzeichnet,**

daß die Frequenzverschiebung senderseitig erfolgt.

5. Verfahren nach Anspruch 1,

**dadurch gekennzeichnet,**

daß die Frequenzverschiebung empfängerseitig erfolgt.

6. Verfahren nach Anspruch 1 und 3,

**dadurch gekennzeichnet,**

daß die Signalrichtungsumkehr und die Einkopplung des modulierten optischen Signals in die Einmodenfaser auf der Sendeseite mittels eines zweiten faseroptischen Kopplers (KS) erfolgt.

7. Verfahren nach Anspruch 1,

**dadurch gekennzeichnet,**

daß der Betrag $\Delta f$ der Frequenzverschiebung einstellbar ist.

## Claims

1. An optical information transmission method, in particular for wide-band transmissions, between spaced transmitters and receivers, an unmodulated optical carrier of a receiver-side laser being split up into two portions, the first portion thereof forming the carrier portion fed to the transmission path, and the second portion forming the local laser wave being shifted in frequency by an amount f, and the carrier portion returning over the transmission path from the transmitter being mixed with the local laser wave according to the optical heterodyne method, thus an intermediate frequency being achieved,

**characterised by that**

the transmission path is a single-mode fibre (EMF), which is passed in either direction by the carrier portion,

that on the transmitter side, the carrier portion is modulated with the desired signal by a reflection modulator (RMOD), and

that on the receiver side, the frequency shift of the local laser wave (LL) is performed by a reflection shift unit (RFV).

2. A method according to claim 1,

**characterised by that**

the two portions of the unmodulated optical carrier are equally large.

3. A method according to claim 1,

**characterised by that**

the single-mode fibre (EMF) maintains polarisation.

4. A method according to claim 1,

**characterised by that**

the frequency shift is performed on the transmitter side.

5. A method according to claim 1,

**characterised by that**

the frequency shift is performed on the receiver side.

6. A method according to claims 1 and 3,

**characterised by that**

the reversal of the signal direction and the coupling-in of the modulated optical signal into the single-mode fibre on the transmitter side is achieved by means of a second fibre-optical coupler (KS).

7. A method according to claim 3,

**characterised by that**

the amount $\Delta f$ of the frequency shift is adjustable.


## Revendications

1. Procédé pour la transmission optique d'informations à réception hétérodyne, en particulier pour des transmissions à large bande, entre des transmetteurs et récepteurs spatialement séparés l'un de l'autre, un porteur optique non-modulé d'un laser agencé au côté du récepteur étant divisé en deux parts, l'une part formant la part du porteur alimentée à la course de transmission et l'autre part formant l'onde de laser locale, dont la fréquence est décalée par une valeur f, et la part du porteur retournant du transmetteur par l'intermédiaire de la course de transmission étant mélangée avec l'onde de laser locale selon la méthode optique hétérodyne, donc résultant une fréquence intermédiaire,

**caractérisé en ce que**

la course de transmission est une fibre monomode (EMF), qui est passée en deux directions par la part du porteur,

que la part du porteur est modulée par un modulateur à réflexion (RMOD) avec le signal utile, au côté du transmetteur, et

que le décalage de fréquence de l'onde de laser locale (LL) se fait dans une unité de décalage de fréquence (RFV).

2. Procédé selon la revendication 1,

**caractérisé en ce que**

les deux parts du porteur optique non-modulé ont une grandeur identique.

3. Procédé selon la revendication 1,

**caractérisé en ce que**

la fibre monomode (EMF) garde la polarisation.

4. Procédé selon la revendication 1,

**caractérisé en ce que**

le décalage de fréquence se fait au côté du transmetteur.

5. Procédé selon la revendication 1,

**caractérisé en ce que**

le décalage de fréquence se fait au côté du récepteur.

6. Procédé selon les revendications 1 et 3,

**caractérisé en ce que**

l'inversion de la direction du signal et le couplage du signal optique modulé dans la fibre monomode se font au moyen d'un deuxième coupleur à fibres optiques, au côté du transmetteur.

7. Procédé selon la revendication 1,

**caractérisé en ce que**

la valeur $\Delta f$ du décalage de fréquence est ajustable.

# FIG.1

EP 0 288 418 B1

# FIG.2